(19) Europäisches Patentamt

**European Patent Office**

Office européen des brevets

(11) Veröffentlichungsnummer: **0 208 128**
**B1**

(12) **EUROPÄISCHE PATENTSCHRIFT**

(51) Int. Cl.⁴: **F01N 7/08, F16L 27/00**

(45) Veröffentlichungstag der Patentschrift:
07.02.90

(21) Anmeldenummer: 86107388.0

(22) Anmeldetag: 30.05.86

(54) **Gelenkige Verbindung von Rohrteilen, insbesondere bei Abgasleitungen von Kraftfahrzeugen.**

(30) Priorität: 12.07.85 DE 3524931
29.03.86 DE 3610684

(43) Veröffentlichungstag der Anmeldung:
14.01.87 Patentblatt 87/3

(45) Bekanntmachung des Hinweises auf die Patenterteilung:
07.02.90 Patentblatt 90/6

(84) Benannte Vertragsstaaten:
DE FR GB IT SE

(56) Entgegenhaltungen:
DE-A- 2 912 347
DE-A- 3 321 382
DE-C- 2 838 990
FR-A- 2 419 393
FR-A- 2 451 456

(73) Patentinhaber: Witzenmann GmbH
Metallschlauch-Fabrik Pforzheim, Östliche
Karl-Friedrich-Strasse 134, D-7530 Pforzheim(DE)

(72) Erfinder: Winze, Wilfried, Dr.-Ing., Grosser
Lückenweg 59a, D-7530 Pforzheim(DE)
Erfinder: Wünschmann, Manfred, Dipl.-Ing.,
Obernhäuerweg 12a, D-7540 Neuenbürg(DE)
Erfinder: Dörge, Franz, Hertzstrasse 12,
D-7530 Pforzheim(DE)

(74) Vertreter: Lemcke, Rupert, Dipl.-Ing. et al,
Patentanwälte Dipl.-Ing. R. Lemcke Dr.-Ing. H.J.
Brommer Bismarckstrasse 16 Postfach 4026,
D-7500 Karlsruhe 1(DE)

## Beschreibung

Die Erfindung betrifft eine gelenkige Verbindung von Rohrteilen bestehend aus mindestens einem flexiblen, die Rohrteile dicht miteinander verbindenden Leitungselement in Form eines Wellrohres, Metallbalges oder Metallschlauches und mindestens einem die Rohrteile wenigstens mittelbar über zwischengesetzte, axial fixierte Stützpolster gegenseitig tragend miteinander verbindenden, von einem ersten der Rohrteile bzw. einem dortigen Anschlußstück ausgehenden Stützteil, wobei der Strömungsweg für das Medium durch ein innerhalb des Leitungselementes angeordnetes Innenschutzrohr gebildet ist, das mit einem Ende an dem zweiten Rohrteil bzw. einem dortigen Anschlußstück befestigt ist. Hierbei gilt das besondere Interesse derartigen gelenkigen Verbindungen bei Abgasleitungen von Kraftfahrzeugen.

Derartige Verbindungen sind durch die DE-PS 2 838 990 und die DE-OS 3 321 382 bekannt und dienen im wesentlichen, worauf die Erfindung jedoch nicht beschränkt ist, dem Einsatz in Abgasleitungen von Kraftfahrzeugen, wo sie Relativbewegungen zwischen insbesondere querliegenden Motoren und Abgasanlage zulassen, indem sie die an sie angeschlossenen Rohrteile gedämpft federnd gelenkig miteinander verbinden und gegenseitig schwingungstechnisch entkoppeln.

Dabei sind jedoch die gedämpft federnden Verbindungsglieder, die bestrebt sind, die Rohrteile bzw. damit verbundene Anschlußstücke in einer der Mittellage des Leitungselementes entsprechenden Position zu halten, außerhalb des Leitungselementes angeordnet und damit korrosiven Einflüssen sowie der Gefahr von Beschädigungen ausgesetzt. Sie bedingen außerdem seitlich ausladende Arme bzw. Stützteile, deren auf die Rohrteile bzw. die damit verbundenen Anschlußstücke ausgeübten Biegemomente durch entsprechend starke Ausbildung der genannten Teile abgestützt werden müssen.

Insgesamt ergibt sich eine ausladende, wenig montagefreundliche und beschädigungsempfindliche Bauweise.

Aufgabe der Erfindung ist es, eine gelenkige Verbindung der eingangs genannten Art dahingehend anders auszubilden, daß ausladend angebrachte gedämpft federnde Verbindungsglieder zwischen den Rohrteilen bzw. den Anschlußstücken vermieden sind, diese Verbindungsglieder äußeren korrosiven Einflüssen sowie der Gefahr von Beschädigungen von außen her zumindest weitgehend entzogen sind, ein der Leitungsachse näherer Kraftfluß der Verbindungsglieder erreicht ist und sich damit insgesamt eine elegantere, montagefreundlichere und kompaktere Bauweise ergibt. Darüber hinaus soll das Leitungselement gegenüber dem Gasstrom, der bisher zum Leitungselement freien Zutritt hatte, weitestgehend abgekoppelt werden und es sollen ohnehin vorhandene Bauteile durch Übernahme zusätzlicher Aufgaben in ihrer Brauchbarkeit eine Steigerung erfahren.

Diese Aufgabe ist erfindungsgemäß dadurch gelöst, daß das andere Ende des Innenschutzrohres auf seiner Außenseite mit wenigstens einem ringförmig umlaufenden Stützpolster in Verbindung steht, daß das Stützpolster außen durch das am ersten Rohrteil bzw. einem dortigen Anschlußstück wenigstens mittelbar befestigte oder durch dieses gebildete Stützteil gehalten ist und daß die axiale Fixierung des Stützpolsters beidseits gegen das Innenschutzrohr und/oder das Stützteil erfolgt.

Damit beruht die Erfindung auf dem Prinzip, ein gedämpft federndes Verbindungsglied zwischen den Rohrteilen bzw. damit verbundenen Anschlußstücken zentralsymmetrisch zum Strömungsweg anzuordnen und dieses Verbindungsglied teilweise durch das Innenschutzrohr, das damit zu einem der Stützteile wird, darzustellen, wobei dann das Innenschutzrohr mit seinem freien Ende über wenigstens ein Stützpolster am anderen Rohrteil bzw. dortigen Anschlußstück abgestützt ist. Hierbei wird das Stützpolster radial innen durch das Innenschutzrohr gehalten, radial außen durch das Stützteil und in den beiden Achsrichtungen einerseits durch das Innenschutzrohr und andererseits durch das Stützteil, so daß das Stützpolster praktisch in einer von Innenschutzrohr und Stützteil gebildeten Ringkammer sitzt.

Damit hat das Innenschutzrohr nunmehr hinsichtlich seines Aufgabenbereiches eine Erweiterung erfahren, so daß damit quasi ein Bauteil für das gedämpft federnde Verbindungsglied entfallen kann. Da außerdem durch die Anordnung dieses Verbindungsgliedes zentralsymmetrisch und näher der Achse des Strömungsweges ausladende Arme für den Kraftfluß über das Verbindungsglied entfallen, können eventuell vorhandene Anschlußstücke wesentlich dünnwandiger, vorzugsweise als Stanzteil oder Prägeteil ausgebildet werden, so daß sich hierdurch und auch durch die übrige Ausbildung des Verbindungsgliedes eine wesentlich leichtere, weniger Material beanspruchende und damit erheblich billigere Bauform ergibt.

Durch die erfindungsgemäße Ausbildung des Verbindungsgliedes ist aber auch eine Abkopplung des Gasstromes von der Innenseite des Leitungselementes erreicht, was sich hinsichtlich der Temperaturbelastung und der Korrosionsbelastung des Leitungselementes auswirkt, aber auch dazu führt, daß die mit dem Gasstrom einhergehenden, pulsierenden Druckschwankungen nicht auf die Innenseite des Leitungselementes gelangen können, wodurch das Leitungselement auch schwingungsmäßig vom Gasstrom abgekoppelt ist und seine Schallemission herabgesetzt wird.

Nach einer ersten grundsätzlichen Bauform gemäß der Erfindung kann vorgesehen sein, daß das Stützteil gemeinsam mit dem Leitungselement vom anderen Rohrteil bzw. einem dortigen Anschlußstück ausgehend innerhalb des Leitungselementes angeordnet ist. Diese Maßnahmen haben die Wirkung, daß das nunmehr innerhalb des Leitungselementes angeordnete gedämpft federnde Verbindungsglied sowohl außerhalb des Leitungselementes wirksamen Einflüssen entzogen ist als auch ein ausladendes Bauteil nicht mehr darstellen kann, so daß sich die erfindungsgemäße gelenkige Verbindung als eine außen durch das Leitungselement abgeschlossene und damit glatte, elegante und kompakte Einheit darstellt.

Bei der vorstehend geschilderten ersten grundsätzlichen Bauform gemäß der Erfindung ist zunächst von einer einflutigen Bauweise ausgegangen, bei der also ein Strömungsweg vorhanden ist, der mit Hilfe des Innenschutzrohres das gedämpft federnde Verbindungsglied aufweist und innerhalb des Leitungselementes angeordnet ist. Nun kommt es jedoch gerade bei Abgassammelleitungen von Kraftfahrzeugen häufig vor, daß mehrflutige Leitungen auftreten, bei denen in der Regel ausgehend von gemeinsamen Anschlußstücken mehrere Strömungswege nebeneinander angeordnet sind. Setzt man bei solchen mehrflutigen Einrichtungen die vorstehend beschriebene Bauweise mehrfach nebeneinander, so ergibt sich dadurch ein entsprechender Platzbedarf und es bereitet insbesondere die Anbringung mehrerer paralleler Leitungselemente fertigungstechnisch Schwierigkeiten, da diese jeweils nicht in einem Arbeitsgang durchgehend mit den Rohrteilen bzw. Anschlußstücken verbunden, in der Regel verschweißt werden können.

Daher ist es in Weiterbildung des Erfindungsgedankens besonders zweckmäßig, daß bei mehrflutigen, gemeinsame Anschlußstücke aufweisenden Leitungen für diese ein gemeinsames, die nebeneinanderliegenden Strömungswege umfangendes Leitungselement mit den Anschlußstücken verbunden ist. Auf diese Weise können die mehreren Strömungswege einschließlich den sie begleitenden Verbindungsgliedern konstruktiv eng nebeneinandergerückt werden und es ergibt sich ein alle Strömungswege umfassendes Leitungselement, was nicht nur zu einer wesentlich kompakteren Bauweise führt, sondern vor allem auch zu der Möglichkeit, nunmehr das Leitungselement in einem umlaufenden Arbeitsgang mit den Anschlußstücken zu verbinden, womit sich eine erhebliche Material- und Fertigungsersparnis ergibt. Infolge der erfindungsgemäßen Ausbildung des jedem Strömungsweg zugeordneten Verbindungsgliedes sind auch die einzelnen Strömungswege ohne sie trennendes Leitungselement dicht voneinander getrennt, so daß es nicht zu von einem Strömungsweg auf einen anderen Strömungsweg überspringenden Druckschwankungen kommen kann, also auch in dieser Hinsicht durch das gemeinsame, alles umfassende Leitungselement keine Schwierigkeiten oder Hindernisse auftreten.

Zum Vorstehenden kann es zweckmäßig sein, daß das Leitungselement im Querschnitt im wesentlichen der Umschlingungskontur der nebeneinanderliegenden Strömungswege einschließlich der sie bildenden Teile entspricht, wobei bei zweiflutigen Leitungen der Querschnitt des Leitungselementes vorteilhafterweise einem Oval entspricht, das Leitungselement also insbesondere als Ovalbalg ausgebildet ist.

Auch für die vorstehend geschilderten, erfindungsgemäßen Bauweisen können sich im Hinblick auf sehr enge Einbauverhältnisse wegen des erforderlichen Querschnittes noch Schwierigkeiten ergeben, so daß sich die weitere Aufgabe nach der Schaffung einer noch schlankeren Bauform ergibt, deren Platzbedarf in Querschnittsrichtung praktisch nur noch dem eines normalen Leitungselementes entspricht, ohne daß dabei etwas von den bereits erreichten Vorzügen aufgegeben werden muß.

Dies ist nach einer zweiten grundsätzlichen Bauform gemäß der Erfindung dadurch erzielt, daß das Leitungselement mit dem dem ersten Rohrteil abgewandten Ende des Stützteiles verbunden ist und daß das Innenschutzrohr in seiner Länge die des Leitungselementes überragend mit seinem freien Ende zur Bildung der beweglich geführten Verbindung in das Stützteil ragt.

Durch diese Maßnahmen ist die Anordnung des Stützpolsters in Axialrichtung neben das Leitungselement verlegt, so daß durch die Stützpolsteranordnung die Konstruktion der gelenkigen Verbindung hinsichtlich des radialen Querschnittes einer Beeinträchtigung bzw. Vergrößerung nicht mehr ausgesetzt ist, obwohl andererseits die Abschirmung des Leitungselementes vom Gasstrom aufrecht erhalten werden konnte, die Anordnung des Stützpolsters nach außen hin vollkommen gekapselt und damit äußeren Einflüssen entzogen und das Innenschutzrohr in die Ausbildung des Verbindungsgliedes einbezogen bleibt, so daß durch diese weitere dem Innenschutzrohr gegebene Funktion ein entsprechendes gesondertes Bauteil nach wie vor entfallen kann.

Ergibt sich auch hier die Anwendung auf mehrflutige Leitungen, beispielsweise Abgassammelleitungen von Kraftfahrzeugen, so ist es zur weiteren Platzersparnis zweckmäßig, daß die mehrflutigen Leitungen ein gemeinsames, die nebeneinanderliegenden Strömungswege umfassendes, mit den Rohrteilen verbundenes Leitungselement aufweisen, daß das Leitungselement beidseits mit je einer Öffnungen für die Strömungswege aufweisenden Anschlußplatte verbunden ist und daß die eine Anschlußplatte mit ihren Öffnungen ggf. unter Zwischenschaltung der Enden der Innenschutzrohre auf den Enden der zugeordneten Rohrteile und die andere Anschlußplatte auf den freien Enden der zugeordneten Stützteile festgelegt ist. Hierbei können auch die Stützteile zu einem die nebeneinanderliegenden Strömungswege umfangenden Bauteil vereinigt sein, so daß sich insgesamt eine sehr kompakte und montagefreundliche Baueinheit ergibt.

Für alle vorstehend geschilderten Bauformen kann es zweckmäßig sein, wenn das Stützteil im wesentlichen als zum Innenschutzrohr koaxiales Rohrstück ausgebildet ist, das das oder die Stützpolster nach radial außen abstützt und festhält.

Ferner können Innenschutzrohr und/oder Stützteil einstückig mit den Rohrteilen verbunden sein, was je nach Gestaltung des Einzelfalles die Herstellung einer durch Anschlußteile bzw. -flansche gebildeten Anschlußverbindung vermeidet.

Außerdem ist es in der Regel für alle vorstehend beschriebenen Bauformen angebracht, daß wenigstens zwei Stützpolster nebeneinander angeordnet und durch eine radial zwischen sie ragende Welle des Innenschutzrohres oder des Stützteiles in gegenseitigem axialem Abstand gehalten sind. Diese Bauform ist im allgemeinen anzuwenden, da die auftretenden Axialkräfte in beide Richtungen wirksam sind und ebenso in beiden Richtungen über ein Stützpolster ihre Gegenlagerung finden müssen. Dabei können benachbarte Stützpolster die Welle überbrückend einstückig miteinander verbunden sein, wodurch sich hinsichtlich Fertigung und Montage eine Vereinfachung und Erleichterung ergibt.

Ferner kann vorgesehen sein, daß bei mehreren nebeneinander angeordneten Stützpolstern diese in Axialrichtung unterschiedliche Abmessungen aufweisen, womit sich unsymmetrische Stützpolsterpaarungen im Hinblick auf die auftretenden Kräfte, die Richtung der resultierenden Gewichtsbelastung etc. erstellen lassen.

Das freie Ende des Stützteiles läßt sich als axiale Anlage für das benachbarte Stützpolster nach radial innen bis an das Innenschutzrohr abgebogen ausbilden, wobei es zweckmäßig sein kann, im Bereich des abzubiegenden Abschnittes in Längsrichtung des Stützteiles verlaufende Einschnitte vorzusehen, um das Abbiegen zu erleichtern. Selbstverständlich darf durch derartige Einschnitte der Querschnitt des Stützteiles nicht so weit geschwächt werden, daß es hinsichtlich seiner Haltefunktion gegenüber dem benachbarten Stützpolster beeinträchtigt ist.

Andererseits kann im entsprechenden Falle das freie Ende des Innenschutzrohres als axiale Anlage für das benachbarte Stützpolster nach radial außen bis an das Stützteil abgebogen sein, so daß es auch hier keiner zusätzlichen Bauteile für die Paarung mit dem benachbarten Stützpolster bedarf.

Neben den vorstehend betrachteten Stützpolsterkonstruktionen kann eine andere, diese betreffende Bauform dadurch charakterisiert sein, daß das Stützpolster einen U-förmigen Radialquerschnitt mit zur Leitungsachse parallelen Schenkeln aufweist und daß der radial außen liegende Schenkel des Stützpolsters am dem anderen Rohrteil abgewandten Ende des Stützteiles und der radial innen liegende Schenkel auf der Außenseite des freien Endes des Innenschutzrohres gehalten ist. Dabei können die freien Schenkelenden durch mit dem Stützteil und dem Innenschutzrohr verbundene Laschen gefaßt sein, wobei außerdem vorgesehen sein kann, daß mehrere Laschen sich je über einen Umfangsabschnitt erstrecken und sich mit entsprechenden Ausnehmungen der Schenkelenden in formschlüssigem Eingriff befinden. Hier können die Laschen mit dem jeweiligen Bauteil beispielsweise durch Schweißen verbunden sein, sie können jedoch auch durch entsprechende Formgebung hergestellter Bestandteil eines in das Stützteil eingesetzten bzw. auf das Innenschutzrohr aufgesetzten Ringes bzw. einer entsprechenden Hülse sein.

Diese Bauform erbringt neben der Schwingungsdämpfung und Halterung in axialer und radialer Richtung auch die Möglichkeit der Aufnahme von Torsionskräften. In diesem Zusammenhang kann es zur Steigerung der Wirkung zweckmäßig sein, daß ein weiteres Stützpolster mit U-förmigem Radialquerschnitt mit dem die Schenkelenden verbindenden Steg gegen den Steg des ersten Stützpolsters gesetzt ebenfalls zwischen Stützteil und Innenschutzrohr mit seinen Schenkeln in der bereits geschilderten Weise festgelegt ist.

Soweit nicht in einem der vorstehend beschriebenen Fälle bereits geschehen, ist es zweckmäßig, daß innerhalb des Innenschutzrohres koaxial ein einseitig am dortigen Rohrteil bzw. Anschlußstück festgelegtes, sich im wesentlichen über die Länge des Leitungselementes erstreckendes Wärmeschutzrohr angeordnet ist. Dieses Wärmeschutzrohr kann dazu dienen, die aus dem Abgas herrührende Temperaturbelastung vom Innenschutzrohr und den mit diesem verbundenen Bauteilen fernzuhalten, wobei insbesondere dieser Wärmeschutz auch den Stützpolstern gilt. Eine andere Möglichkeit, die Stützpolster vor zu großer Erwärmung zu schützen, kann darin bestehen, daß die Stützpolster auf der radial innen liegenden Seite einen Einsatz oder eine Schicht aus Keramikmaterial od. dgl. aufweisen.

Ferner kann vorgesehen sein, daß die Stützpolster im wesentlichen rechteckigen Querschnitt aufweisen. Hier finden die Bewegungen der die Rohrteile miteinander verbindenden, erfindungsgemäßen Baueinheit unter gedämpft federnder Verformung der Stützpolster statt, ohne daß es zu gleitenden Relativbewegungen zwischen Stützpolstern einerseits und Innenschutzrohr sowie Stützteil andererseits kommt.

Mit Ausnahme der Stützpolster, die einen U-förmigen Radialquerschnitt haben, besteht jedoch auch die Möglichkeit, daß die in Axialrichtung weisenden Flächen des Stützpolsters und die mit diesen in Berührung befindlichen Flächen des Innenschutzrohres und/oder des Stützteiles in Radialrichtung kreisbogenförmig verlaufen, so daß an diesen Paarungen eine gelenkartige Relativbewegung stattfinden kann. Die Wahl zwischen den beiden vorgenannten Bauformen richtet sich nach dem jeweiligen Einzelfall.

Eine weitere Gestaltung der Stützpolster kann dadurch gegeben sein, daß der Axialquerschnitt der Stützpolster über den Umfang sich ändernd ausgebildet ist, derart, daß durch die Stützpolster in eine Richtung eine Sperrung der Gelenkverbindung bezüglich Schwenkbewegung gegeben ist, während in der dazu senkrechten Richtung durch die Stützpolster ein Freiraum für die Schwenkbewegung belassen ist. Mit einer in diesem Rahmen vorgenommenen Stützpolstergestaltung läßt sich im Hinblick auf bestimmte Anwendungsbedingungen die Schwenkrichtung der Gelenkverbindung in vorherbestimmbarer Weise einschränken bzw. festlegen, wobei es zweckmäßig sein kann, ein so gestaltetes Stützpolster durch geeignete Mittel gegen Verdrehen zu sichern.

Was die Ausbildung der Stützpolster an sich betrifft, so können diese aus temperatur- und korrosionsbeständigem Keramik- oder Metallmaterial in Form eines Faser- oder Drahtvlieses, -geflechtes, -gewebes, -gestrickes od. dgl. gepreßt sein, wobei sie wenigstens teilweise aus einem Material mit Gleitlagereigenschaften bestehen oder mit diesem beschichtet sein können und/oder mit einem zugesetzten Gleitmittel verpreßt sein können, um das Entstehen von Quietschgeräuschen od. dgl. bei der gelenkartigen Bewegung des erfindungsgemäßen Bauteiles zu verhindern. Außerdem kann je nach Einzelfall vorgesehen sein, daß das jeweilige Stützpolster wenigstens einen Stützkörper mit gegenüber dem Polstermaterial größerer Härte bzw. Festigkeit eingepreßt enthält, um auf diese Weise die gedämpft federnden Eigenschaften des Stützpolsters in einer bestimmten Richtung festzulegen.

Weitere Einzelheiten der Erfindung ergeben sich aus der nachfolgenden Beschreibung von Ausführungsformen, die im wesentlichen in Form von Axialschnitten auf der Zeichnung dargestellt sind. In der Zeichnung zeigen:

Fig. 1 eine zweiflutige Gelenkverbindung in seitlicher Schnittansicht;
Fig. 2 die Draufsicht auf den Gegenstand gemäß Fig. 1 unter Fortlassung einer Flanschplatte;
Fig. 3 eine Einzelheit aus Fig. 1 in teilweiser Draufsicht;
Fig. 4 und 5 weitere Ausführungsformen einer Gelenkverbindung gemäß der in Fig. 1 dargestellten Grundbauform in vereinfachter Darstellung und zum Teil ausschnittweise;
Fig. 6 eine weitere Grundbauform einer Gelenkverbindung im radialen Halbschnitt;
Fig. 7 eine ergänzte Ausführung der Bauform gemäß Fig. 6 und
Fig. 8 bis 16 weitere Ausführungsformen einer Gelenkverbindung nach der Grundbauform gemäß Fig. 6 in vereinfachter Schnittdarstellung und zum Teil ausschnittweise.

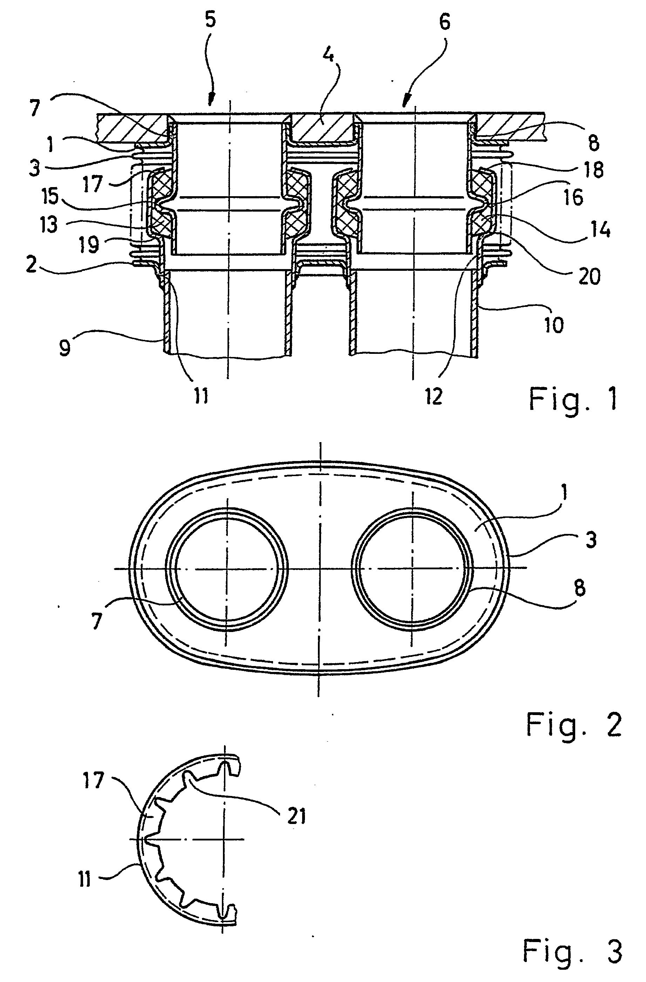

Gemäß Fig. 1 und 2 sind zwei Anschlußstücke 1, 2 ersichtlich, die durch einen daran mit seinen Enden angeschweißten, ovalen Metallbalg 3 miteinander verbunden sind. Wie dargestellt, sind die Anschlußstücke 1,2 tiefgezogene Blechteile, wobei mit dem Anschlußstück 1 eine Flanschplatte 4 verschweißt ist. Die Anschlußstücke 1, 2 bzw. die Flanschplatte 4 weisen zwei Öffnungen für zwei Strömungswege 5, 6 auf, die ausgehend von dem Anschlußstück 1 durch zwei darin eingeschweißte Innenschutzrohre 7, 8 im wesentlichen gebildet sind und ausgehend vom Anschlußstück 2 in darin eingeschweißten Rohrteilen 9, 10 ihre Fortsetzung finden.

Zwischen Rohrstücken 9, 10 und Anschlußstück 2 sind rohrförmige Stützteile 11, 12 eingeschweißt, die die Innenschutzrohre 7, 8 außen in Axialrichtung überdecken so, daß zwischen Innenschutzrohren 7, 8 und Stützteilen 11, 12 Ringräume entstehen, in die ringförmig umlaufende Stützpolster 13, 14 eingesetzt sind. Die Stützpolster 13, 14 sind auf den Innenschutzrohren 7, 8 durch umlaufende, radial nach außen gerichtete Wellen 15, 16 in Axialrichtung gehalten, die radial in die Stützpolster eintauchen. Radial außen sind die Stützpolster 13, 14 durch die Stützteile 11, 12 gehalten, die außerdem ringförmig umlaufende, axiale Anlageflächen 17, 18 und 19, 20 für die Stützpolster 13, 14 bilden, durch die diese in beiden Axialrichtungen abgestützt sind.

Auf diese Weise sind die Stützpolster 13, 14 fest in den von den Innenschutzrohren 7, 8 und den Stützteilen 11, 12 gebildeten Ringräumen eingefangen, wobei aber gleichzeitig die Innenschutzrohre 7, 8 mit den Stützteilen 11, 12 und im Ergebnis dann die Anschlußstücke 1, 2 gelenkig und vermittels der Stützpolster 13, 14 gedämpft federnd miteinander verbunden sind. Das jeweils aus den Teilen 7, 11 und 13 bzw. 8, 12 und 14 gebildete Verbindungsglied für die Anschlußstücke 1, 2 sorgt dafür, daß die Anschlußstücke in einer der Mittellage des Leitungselementes 3 entsprechenden Position gehalten werden.

Wie ersichtlich, ist die Innenseite des Leitungselementes 3 mittels der Stützpolster 13, 14 gegenüber dem Gas abgedichtet, das die Verbindungsglieder entlang der Strömungswege 5, 6 passiert, wobei auch die Strömungswege 5, 6 gegeneinander abgedichtet sind, so daß es hier nicht zu einem gegenseitigen Austausch des Strömungsmediums kommen kann. Außerdem weist die in den Fig. 1 und 2 dargestellte Einheit eine kompakte Bauform auf, indem beide Strömungswege bzw. die sie bildenden Verbindungsglieder von einem gemeinsamen Balg 3 umgeben sind, außerhalb dessen keine weiteren Bauteile überstehen. Die Einbeziehung der Innenschutzrohre 7, 8 in den Aufbau der beiden die Strömungswege bildenden und die Anschlußstücke 1, 2 gedämpft fe-dernd relativ zueinander haltenden Verbindungs-glieder gibt diesen Innenschutzrohren eine weitere Brauchbarkeit, die den Einsatz entsprechender eigenständiger Bauteile erübrigt.

Fig. 3 zeigt in teilweiser Draufsicht die Anlagefläche 17 des Stützteiles 11, wobei ersichtlich ist, daß Einschnitte 21 vorgesehen sind, um das radial nach innen gerichtete Einbördeln der Anlagefläche 17 zu erleichtern. Dabei muß selbstverständlich dafür Sorge getragen sein, daß durch die Einschnitte 21 die Stabilität der Anlagefläche 17 nicht derart beeinträchtigt ist, daß sie die Stützfunktion gegenüber dem Stützpolster 13 nicht mehr ausüben kann.

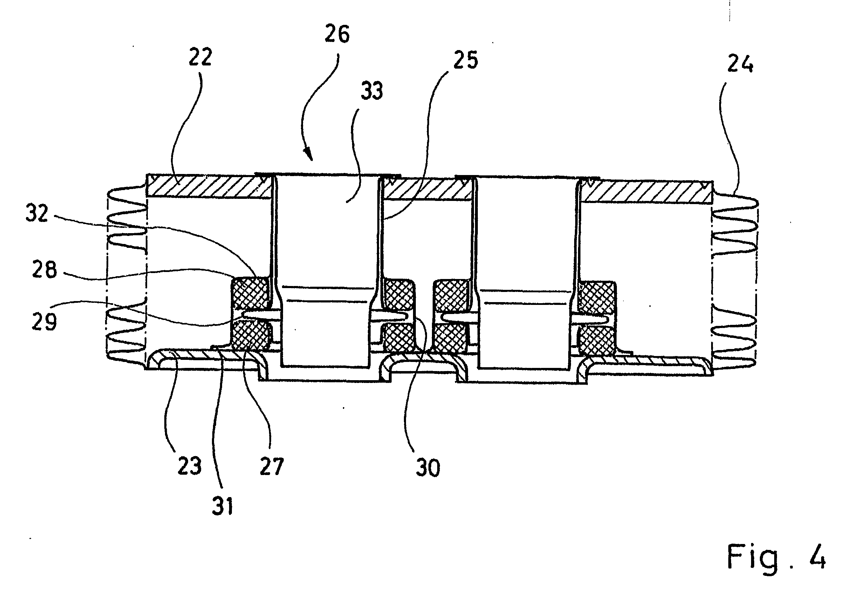

Bezüglich der nachfolgenden Beschreibung der weiteren Ausführungsformen gemäß den Fig. 4 bis 8 wird bei diesen, soweit eine mehrflutige Darstellung vorliegt, jeweils nur eine Seite bzw. der durch das dortige Verbindungsglied gebildete Strömungsweg beschrieben, da diese Beschreibung dann gleichermaßen für den weiteren, parallelen Strömungsweg dient. Im übrigen gilt aber jedes der vorstehen-den und nachfolgend beschriebenen Verbindungs-glieder selbstverständlich grundsätzlich auch für eine einflutige Leitung, wobei vielfach Anschlußstücke nicht notwendig sind, vielmehr das Leitungselement unmittelbar mit dem ankommenden und abgehenden Rohrteil verbunden sein kann.

Fig. 4 zeigt Anschlußstücke 22 und 23 sowie ein mit diesen endständig verschweißtes, alles umfassendes Leitungselement 24, das wiederum gemäß Fig. 1 ausgebildet und ein Ovalbalg sein kann.

In das Anschlußstück 22 ist ein Innenschutzrohr 25 zur Bildung des Strömungsweges 26 eingesetzt, das sich bis zu diesem Strömungsweg entsprechend den Öffnungen des Anschlußstückes 23 erstreckt.

Das Innenschutzrohr 25 trägt außen ringförmig umlaufend auf seinem freien Ende zwei Stützpolster 27, 28 mit rechteckigem Querschnitt, die durch eine vom Innenschutzrohr 25 gebildete Welle 29 voneinander getrennt sind, wobei die Welle 29 für die axiale Abstützung des Innenschutzrohres 25 gegenüber den Stützpolstern 27, 28 sorgt.

Radial außen befinden sich die Stützpolster 27, 28 in Anlage an ein rohrförmiges Stützteil 30, das bei 31 mit dem Anschlußstück 23 verschweißt ist. Das freie Ende des Stützteiles 30 ist unter Bildung einer Anlagefläche 32 für die Axialabstützung des Stützpolsters 28 ähnlich wie bei der Ausführungsform gemäß Fig. 1 bis 3 nach innen eingebördelt. Die Axialabstützung des Stützpolsters 27 nach unten geschieht über das Anschlußstück 23.

Auch hier ist also ein gedämpft federndes Verbindungsglied für die Anschlußstücke 22 und 23 im wesentlichen dadurch gebildet, daß das Innenschutzrohr 25 bezüglich seines freien Endes über die Stützpolster 27, 28 am dortigen Anschlußstück 23 bzw. dem damit verbundenen Stützteil 30 festgelegt ist, wobei durch diese Bauform gleichzeitig sichergestellt ist, daß das den Strömungsweg 26 passierende Abgas keinen unmittelbaren Zutritt zur Innenseite des Ovalbalges 24 hat.

In das Innenschutzrohr 25 ist außerdem noch ein Wärmeschutzrohr 33 eingesetzt und mit seinem einen Ende am Anschlußstück 22 festgelegt. Dieses Wärmeschutzrohr hält insbesondere die Temperaturbelastung vom Bereich der Stützpolster 27, 28 und diesen selbst fern.

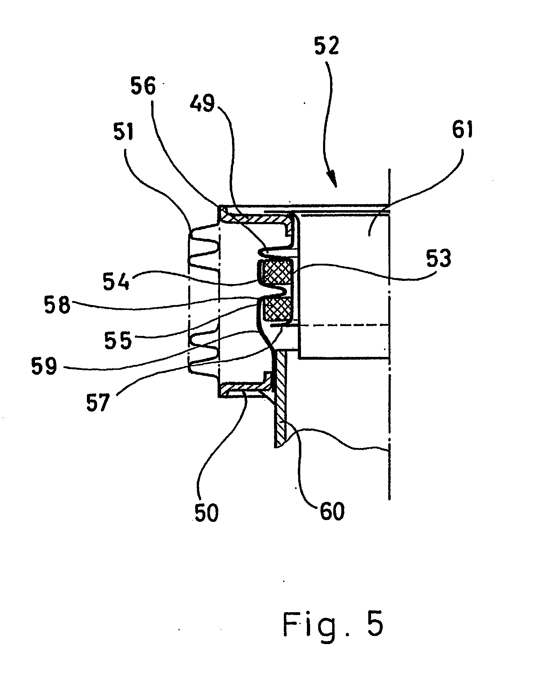

Die Ausführungsform gemäß Fig. 5 zeigt Anschlußstücke 49, 50, die durch einen endständig mit ihnen verschweißten Balg 51 miteinander verbunden sind. In eine Öffnung des Anschlußstückes 49 ist unter Bildung eines Strömungsweges 52 ein Innenschutzrohr 53 eingesetzt, das an seinem freien Ende auf dem Umfang ringförmig umlaufend zwei Stützpolster 54, 55 trägt, wobei das Stützpolster 54 in Axialrichtung gegen eine Welle 56 des Innenschutzrohres sowie das Stützpolster 55 gegen eine endständige Aufbördelung 57 des Innenschutzrohres abgestützt ist.

Zwischen die Stützpolster 54 und 55 taucht zur radialen Halterung von außen eine Welle 58 eines rohrförmigen Stützteiles 59 ein, das die Stützpolster im übrigen nach radial außen hin hält und mit seinem gegenüberliegenden Ende mit dem Anschlußstück 50 verschweißt ist, wobei von dieser Schweißstelle ausgehend und gleichzeitig mitverschweißt ein Rohrteil 60 den Strömungsweg fortsetzt.

In das Innenschutzrohr 53 ist wiederum zusätzlich ein Wärmeschutzrohr 61 eingesetzt, das in Axialrichtung den gesamten von den Stützpolstern 54, 55 und den mit diesen verbundenen Teilen eingenommenen Bereich überdeckt.

Allen bisher dargestellten Ausführungsformen ist entsprechend dem Wesen der Erfindung gemeinsam, daß eine gelenkige Verbindung von Rohrteilen dadurch hergestellt ist, daß das von einem Anschlußstück bzw. Rohrteil ausgehende Innenschutzrohr zur Bildung des Verbindungsgliedes mit seinem freien Ende über ein oder mehrere Stützpolster gegenüber dem anderen Anschlußstück bzw. Rohrteil in Axial- und Radialrichtung abgestützt ist, so daß das Verbindungsglied nach der bisher beschriebenen Bauart innerhalb des die Anschlußstücke aufweisenden bzw. mit den weiterführenden Rohrteilen verbundenen Leitungselementes angeordnet ist. Dies gilt gleichermaßen für ein- und mehrflutige Leitungen, wobei für mehrflutige Leitungen die Möglichkeit besteht, mehrere der beschriebenen Verbindungsglieder durch ein gemeinsames Leitungselement zu umgeben, so daß eine kompakte, elegante und einfach herzustellende Bauform möglich ist.

Wie an einigen der geschilderten Beispiele ersichtlich, kann die Gelenkstelle des Verbindungsgliedes ohne weiteres auf die Mitte zwischen den Anschlußstücken bzw. den weiterführenden Rohrteilen gelegt werden, so daß für den das Leitungselement bevorzugt bildenden Balg eine echte Angularbewegungsmöglichkeit gegeben ist.

Bezüglich der Ausbildung der Stützpolster gilt für alle, auch die nachfolgend noch zu schildernden Fälle gemeinsam, daß diese aus Keramik-, bevorzugt aber Metallmaterial in Form eines Faser- oder Drahtvlieses, -geflechtes, -gewebes, -gestrickes od. dgl. gepreßt sind. Dabei kann wenigstens teilweise auch Material mit Gleitlagerschaften mitverwendet werden, um eventuellen Quietschgeräuschen entgegenzuwirken und die Standfestigkeit der Stützpolster zu erhöhen, wobei hier zusätzlich auch bei der Herstellung der Stützpolster noch ein Gleitmittel, beispielsweise Graphit, zugesetzt sein kann. Andererseits können die Stützpolster aber auch noch einen oder mehrere Stützkörper eingelagert enthalten, deren Härte bzw. Festigkeit größer als die des übrigen Stützpolstermaterials ist, um auf diese Weise die Feder- und Dämpfungscharakteristik der Stützpolster entsprechend den jeweiligen Erfordernissen einzustellen.

Bei den beschriebenen und den meisten noch zu beschreibenden Beispielen haben die Stützpolster im wesentlichen rechteckigen Querschnitt, so daß sich die auftretenden Bewegungen im wesentlichen als Verformung der Stützpolster auswirken werden. Hier kann jedoch auch vorgesehen sein, daß zwischen Stützpolstern und sie tragenden Anlageflächen kugelige Konturen verwendet werden, um gelenkige Gleitbewegungen zuzulassen, wo dies zweckmäßig ist.

Wie bereits hervorgehoben, war bei den bisher geschilderten Ausführungsformen das Verbindungsglied einschließlich seiner Stützpolster vollständig innerhalb des Leitungselementes angeordnet. Nachfolgend werden einige Ausführungsbeispiele dafür anhand der Zeichnung beschrieben, bei denen Leitungselement und Stützpolsteranordnung axial hintereinandergeschaltet sind, ohne daß damit das Prinzip verlassen würde, das Innenschutzrohr in die Darstellung des Verbindungsgliedes miteinzubeziehen.

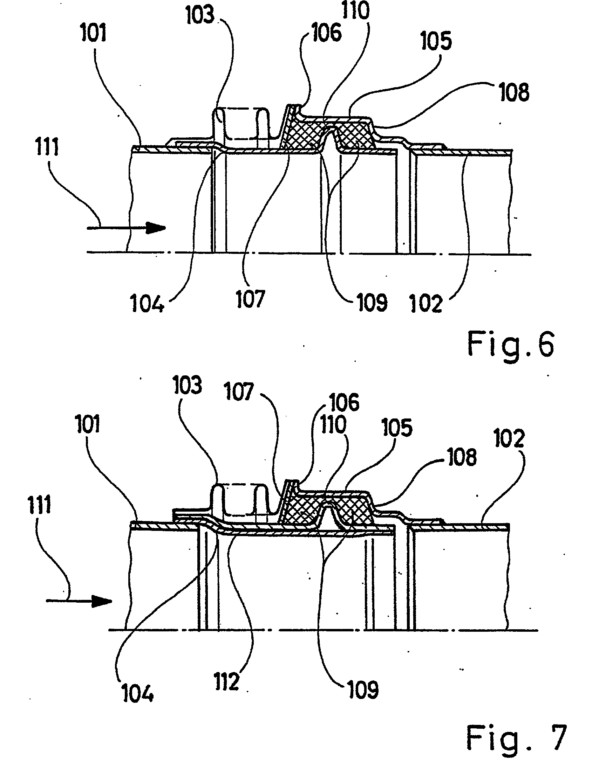

Hierzu zeigt Fig. 6 im radialen Halbschnitt zwei aufeinander zu gerichtete Rohrteile 101, 102. Mit dem Rohrteil 101 sind gemeinsam verbunden ein Leitungselement 103 in Form eines ringgewellten Balges sowie ein in dessen Innerem angeordnetes Innenschutzrohr 104, das in seiner Länge die des Leitungselementes 103 überschreitet und so in ein zylindrisches Stützteil 105 ragt, das mit dem Rohrteil 102 fest verbunden ist. Mit dem freien Ende 106 des Stützteiles 105 ist das dem Rohrteil 101 abgewandte Ende des Leitungselementes 103 über einen schräg verlaufenden Zwischenring 107 verbunden, der dort gleichzeitig eine vom Stützteil 105 mittels einer im wesentlichen radial gerichteten Flanke 108 gebildete Kammer in Axialrichtung abschließt.

In der Kammer sind zwei ringförmig umlaufende Stützpolster 109 von innen am Stützteil 105 sowie in Axialrichtung gegen die Flanke 108 und den Zwischenring 107 anliegend angeordnet, die nach radial innen ihre Abstützung gegen das Innenschutzrohr 104 sowie dort in Axialrichtung gegen eine radial nach außen vorgedrückte Balgwelle 110 des Innenschutzrohres 104 finden.

Durch diese bevorzugt in Richtung des Pfeiles 111 durchströmte Gelenkverbindung sind die Rohrteile 101 und 102 über die Kopplung des Innenschutzrohres 104 mittels der Stützpolster 109 mit dem Stützteil 105 in Grenzen angular gedämpft federnd und gegenseitig tragend miteinander verbunden, wobei das in der Leitung strömende Medium über die Stützpolster 109 praktisch keinen Zutritt nach außen bzw. in das Innere des Leitungselementes 103 hat. Andererseits überschreitet die Gelenkverbindung in Radialrichtung praktisch nicht das übliche, durch das Leitungselement 103 und das Innenschutzrohr 104 gegebene Maß, wobei nach außen hin ein glattzylindrischer Abschluß ohne vorstehende Teile gegeben ist.

Fig. 7 zeigt im wesentlichen die Bauform gemäß Fig. 6 unter Verwendung der dortigen Bezifferung, weshalb insoweit auf die vorgehende Beschreibung verwiesen wird. Gemäß Fig. 7 ist jedoch in das Innenschutzrohr 104 zusätzlich noch ein Wärmeschutzrohr 112 eingesetzt, das das Innenschutzrohr in seiner gesamten Länge überdeckt und dazu dient, die aus dem geführten Medium abgestrahlte Wärme zusätzlich vom Innenschutzrohr 104 und den radial außerhalb diesem gelegenen Teilen fernzuhalten.

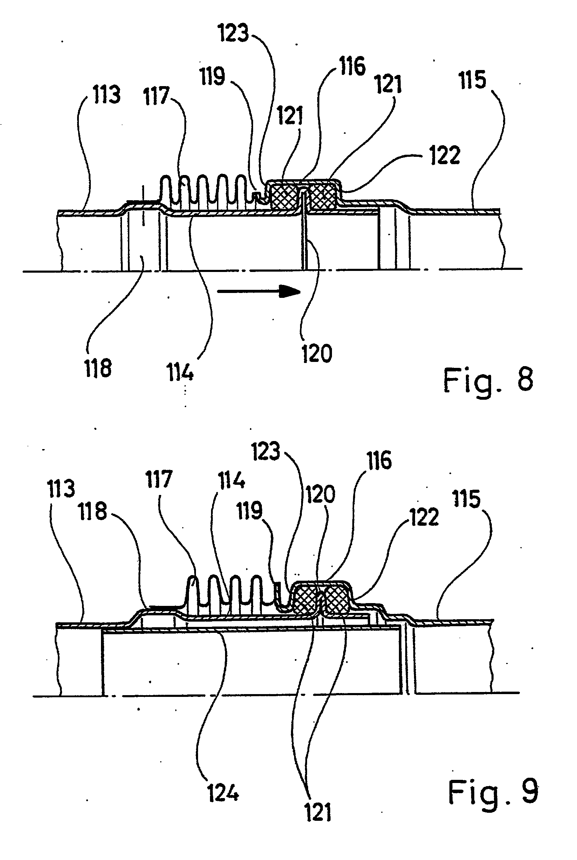

Die Bauform gemäß Fig. 8 entspricht im Prinzip der gemäß Fig. 6, wobei jedoch jeweils das Rohrteil 113 mit dem Innenschutzrohr 114 und das Rohrteil 115 mit dem Stützteil 116 einstückig verbunden ist. Zur leichteren Anbringung des Leitungselementes 117 weist die Verbindungsstelle zwischen Rohrteil 113 und Innenschutzrohr 114 eine radiale Querschnittserweiterung 118 auf. Das Stützteil 116 ist in diesem Falle bei 119 unmittelbar mit dem Leitungselement 117 verbunden.

Ebenso wie bei der Ausführungsform gemäß Fig. 6 hat auch hier das Innenschutzrohr 114 eine radial nach außen gerichtete Welle 120 zur Axialabstützung zweier ringförmiger Stützpolster 121, die in Radialrichtung gegen das Innenschutzrohr 114 und das Stützteil 116 in Anlage sind und im übrigen am Stützteil 116 ihre axiale Festlegung durch dessen im wesentlichen radial gerichtete Flanken 122 und 123 finden.

Fig. 9 zeigt mit gleicher Bezifferung die Bauform gemäß Fig. 8, weshalb insoweit auf die dortige Beschreibung verwiesen wird. Zusätzlich ist jedoch hier ausgehend vom Rohrteil 113 ein dort festgelegtes Wärmeschutzrohr 124 eingezogen, das das Innenschutzrohr 114 in Axialrichtung überragt und im übrigen die gleichen Aufgaben hat, wie dies bereits anhand der Fig. 7 und des dortigen Wärmeschutzrohres 112 erläutert ist.

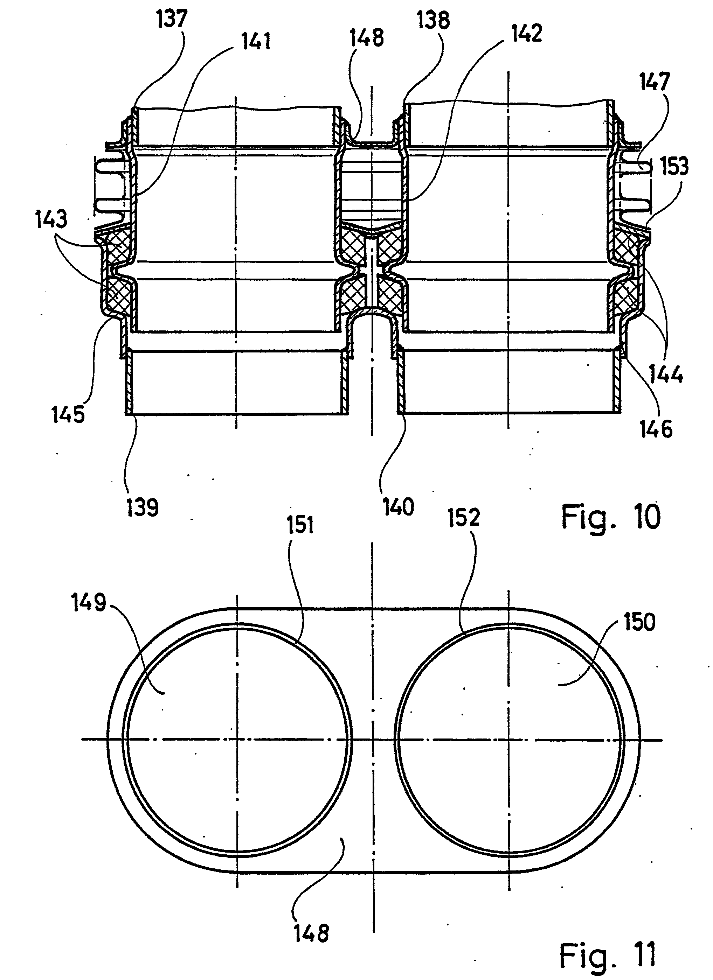

Fig. 10 zeigt fußend auf der anhand der Fig. 6 näher erläuterten Konstruktion eine Zwillingsrohrausbildung mit Rohrteilen 137, 138 einerseits und 139, 140 andererseits. Von den Rohrteilen 137 und 138 geht je ein Innenschutzrohr 141, 142 aus, das in der anhand der Fig. 6 näher beschriebenen Weise über ringförmige Stützpolster 143 bzw. 144 mit einem hier zu einer Baueinheit zusammengefaßten Stützteil 145, 146 gekuppelt ist, das seinerseits an den Rohrteilen 139 bzw. 140 befestigt ist.

Das Leitungselement 147 ist hier beiden Strömungswegen gemeinsam, umschlingt also die zur Bildung der beiden Strömungswege vorhandenen Bauteile, im wesentlichen die Innenschutzrohre 141 und 142. Zur Verbindung des Leitungselementes 147 mit den Rohrteilen 137 und 138 dient die in Fig. 11 im einzelnen noch einmal in Draufsicht dargestellte Anschlußplatte 148, die für jeden Strömungsweg eine Öffnung 149 bzw. 150 hat, welche von einer ringförmigen Aufbördelung 151 bzw. 152 umgeben ist, zwischen der und dem jeweiligen Rohrteil 137 bzw. 138 das jeweilige Innenschutzrohr 141 bzw. 142 eingefangen und durch gemeinsame Verbindung der genannten Teile festgelegt ist.

Ähnlich dem Bauteil 148 ist zwischen Leitungselement 147 und Stützteil 145, 146 eine Anschlußplatte 153 angeordnet als Axialabstützung für die oberen Stützpolster 143, 144 und als ähnlich einem Oval umlaufende Befestigungsfläche für das Leitungselement 147, die ihrerseits mit dem oberen Ende des Stützteiles 146 verbunden ist.

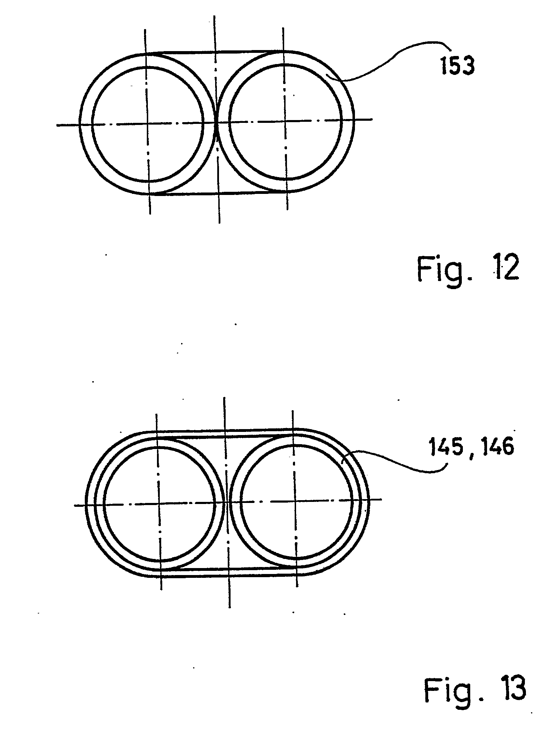

Wie bereits gesagt, sind im vorliegenden Falle die Stützteile 145, 146 zu einer Baueinheit vereinigt, die in Fig. 13 noch einmal in Draufsicht dargestellt ist. Sie können jedoch genausogut in der anhand der Fig. 6 dargestellten Weise jedes für sich umlaufend vorgesehen und durch die Anschlußplatte 153 gemeinsam abgedeckt sein.

Fig. 17 zeigt die Anschlußplatte 153 in Draufsicht.

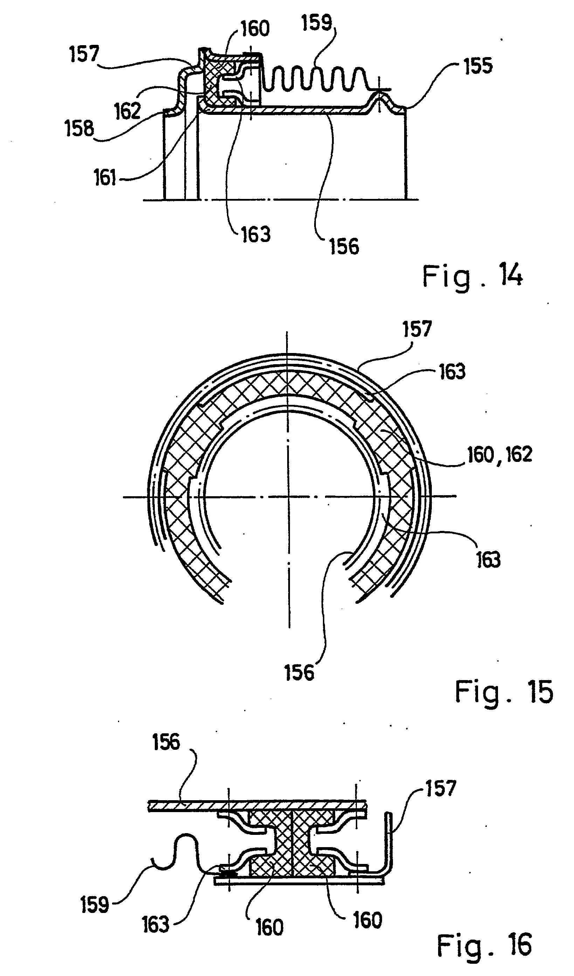

Während bei den bisherigen Ausführungsformen die Stützpolster im wesentlichen rechteckigen Querschnitt hatten, sei hierfür anhand der Fig. 14 bis 16 eine abgewandelte Bauform und deren Anbringung veranschaulicht.

Fig. 14 zeigt eine Gelenkverbindung ähnlich der Bauform gemäß Fig. 8 in radialem Halbschnitt, Fig. 15 ist eine Axialansicht dazu im Bereich des Stützpolsters.

Es ist wieder gezeigt das Ende eines Rohrteiles 155 mit sich einstückig daran anschließendem Innenschutzrohr 156, das mit seinem freien Ende in ein Stützteil 157 ragt, das sich einstückig an ein Rohrteil 158 anschließt. Ein Leitungselement 159 ist mit seinem einen Ende am Rohrteil 155 und mit seinem anderen Ende am freien Ende des Stützteiles 157 befestigt.

Zwischen dem freien Ende des Innenschutzrohres 156 sowie dem Stützteil 157 sitzt ein Stützpolster 160 mit U-förmigem, radialem Querschnitt, das sich mit seinem radial außen liegenden Schenkel in Anlage an der zylindrischen Innenwandung des Stützteiles 157 und mit seinem radial innen liegenden Schenkel in Anlage an der zylindrischen Mantelfläche des freien Endes des Innenschutzrohres 156 befindet. Die Axialabstützung geschieht einerseits durch ei-

7

ne Aufbördelung 161 des freien Endes des Innenschutzrohres 156 sowie eine entsprechende Einbördelung des Stützteiles 157, gegen die der die Schenkel des Stützpolsters 160 verbindende Steg 162 in Anlage ist, und andererseits durch Laschen 163, die einerseits mit dem freien Ende des Stützteiles 157 und andererseits mit dem Innenschutzrohr 156 verbunden sind und die freien Enden der Schenkel des Stützpolsters 160 erfassen. Wie aus Fig. 15 ersichtlich, können die Laschen 163 sich jeweils nur über einen Teil des Umfanges erstrecken und das Stützpolster 160 formschlüssig erfassen, so daß durch diese Verbindungsart Innenschutzrohr 156 und Stützteil 157 über das Stützpolster 160 gleichzeitig gegeneinander gegen Torsion abgestützt sind.

Fig. 16 zeigt schließlich noch eine Abwandlung der in den Fig. 14 und 15 dargestellten Bauform, bei der zwei Stützpolster 160 mit U-förmigem Radialquerschnitt unter gegenseitiger Anlage ihrer radialen Stege gegeneinanderliegend angeordnet sind. In der bereits beschriebenen Weise erfolgt die Festlegung der Schenkel der Stützpolster über Laschen 163 an dem Stützteil 157 einerseits und dem Innenschutzrohr 156 andererseits.

**Patentansprüche**

1. Gelenkige Verbindung von Rohrteilen bestehend aus mindestens einem flexiblen, die Rohrteile dicht miteinander verbindenden Leitungselement (3, 24, 51, 103, 117, 147, 159) in Form eines Wellrohres, Metallbalges oder Metallschlauches und mindestens einem die Rohrteile wenigstens mittelbar über zwischengesetzte, axial fixierte Stützpolster (13, 14; 27, 28; 54, 55; 109, 121, 143, 144, 160) gegenseitig tragend miteinander verbindenden, von einem ersten der Rohrteile (102, 115, 139, 140, 158) bzw. einem dortigen Anschlußstück (2, 23, 50) ausgehenden Stützteil (11, 12; 30; 59; 105; 116; 145, 146, 157), wobei der Strömungsweg für das Medium durch ein innerhalb des Leitungselementes angeordnetes Innenschutzrohr (7, 8; 25, 53, 104, 114, 141, 142; 156) gebildet ist, das mit einem Ende an dem zweiten Rohrteil (101, 113, 137, 138, 155) bzw. einem dortigen Anschlußstück (4, 22, 49) befestigt ist, dadurch gekennzeichnet, daß das andere Ende des Innenschutzrohres (7, 8; 25, 53, 104, 114, 141, 142, 156) auf seiner Außenseite mit wenigstens einem ringförmig umlaufenden Stützpolster (13, 14; 27, 28; 54, 55; 109, 121, 143, 144, 160) in Verbindung steht, daß das Stützpolster außen durch das am ersten Rohrteil (102, 115, 139, 140, 158) bzw. einem dortigen Anschlußstück (2, 23, 50) wenigstens mittelbar befestigte oder durch dieses gebildete Stützteil (11, 12; 30; 59; 105, 116, 145, 146, 157) gehalten ist und daß die axiale Fixierung des Stützpolsters beidseits gegen das Innenschutzrohr und/oder das Stützteil erfolgt.

2. Verbindung nach Anspruch 1, dadurch gekennzeichnet, daß das Stützteil (11, 12; 30; 59) gemeinsam mit dem Leitungselement (3, 24, 51) vom anderen Rohrteil (9, 10, 60) bzw. einem dortigen Anschlußstück (23, 50) ausgehend innerhalb des Leitungselementes angeordnet ist.

3. Verbindung nach einem der vorhergehenden Ansprüche, dadurch gekennzeichnet, daß bei mehrflutigen, gemeinsame Anschlußstücke (1, 2; 22, 23; 49, 50) aufweisenden Leitungen für diese ein gemeinsames, die nebeneinanderliegenden Strömungswege (5, 6, 26, 52) umfangendes Leitungselement (3, 24, 51) mit den Anschlußstücken verbunden ist.

4. Verbindung nach Anspruch 3, dadurch gekennzeichnet, daß das Leitungselement (3) im Querschnitt im wesentlichen der Umschlingungskontur der nebeneinanderliegenden Strömungswege (5, 6) einschließlich der sie bildenden Teile entspricht.

5. Verbindung nach Anspruch 4, dadurch gekennzeichnet, daß bei zweiflutigen Leitungen der Querschnitt des Leitungselementes (3) einem Oval entspricht.

6. Verbindung nach Anspruch 1, dadurch gekennzeichnet, daß das Leitungselement (103, 147, 159) mit dem dem ersten Rohrteil (102, 115, 126, 139, 140, 158) abgewandten Ende des Stützteiles (105, 116, 145, 146, 157) verbunden ist und daß das Innenschutzrohr (104, 114, 141, 142, 156) in seiner Länge die des Leitungselementes überragend mit seinem freien Ende zur Bildung der beweglich geführten Verbindung in das Stützteil ragt.

7. Verbindung nach Anspruch 6, dadurch gekennzeichnet, daß bei mehrflutigen Leitungen diese ein gemeinsames, die nebeneinanderliegenden Strömungswege umfangendes, mit den Rohrteilen (137, 138, 139, 140) verbundenes Leitungselement (147) aufweisen, daß das Leitungselement beidseits mit je einer Öffnungen (149, 150) für die Strömungswege aufweisenden Anschlußplatte (148, 153) verbunden ist und daß die eine Anschlußplatte (148) mit ihren Öffnungen ggf. unter Zwischenschaltung der Enden der Innenschutzrohre (141, 142) auf den Enden der zugeordneten Rohrteile (137, 138) und die andere Anschlußplatte (153) auf den freien Enden der zugeordneten Stützteile (145, 146) festgelegt ist.

8. Verbindung nach Anspruch 7, dadurch gekennzeichnet, daß die Stützteile (145, 146) zu einem die nebeneinanderliegenden Strömungswege umfangenden Bauteil vereinigt sind.

9. Verbindung nach einem der Ansprüche 1 bis 7, dadurch gekennzeichnet, daß das Stützteil (11, 12; 30, 59, 105, 116, 157) im wesentlichen als zum Innenschutzrohr (7, 8; 25; 53, 104, 114, 156) koaxiales Rohrstück ausgebildet ist.

10. Verbindung nach einem der vorhergehenden Ansprüche, dadurch gekennzeichnet, daß Innenschutzrohr (114, 156) und/oder Stützteil (116, 157) einstückig mit den Rohrteilen (113, 115, 155, 158) verbunden sind.

11. Verbindung nach einem der vorhergehenden Ansprüche, dadurch gekennzeichnet, daß wenigstens zwei Stützpolster (27, 28; 54, 55; 109, 121, 143, 144) nebeneinander angeordnet und durch eine radial zwischen sie ragende Welle (29, 58, 110, 120) des Innenschutzrohres (25, 104, 114, 141, 142) oder des Stützteiles (59) in gegenseitigem axialem Abstand gehalten sind.

12. Verbindung nach Anspruch 11, dadurch gekennzeichnet, daß benachbarte Stützpolster (13) die Welle (15) überbrückend einstückig miteinander verbunden sind.

13. Verbindung nach einem der Ansprüche 11 oder 12, dadurch gekennzeichnet, daß die Stützpolster in Axialrichtung unterschiedliche Abmessungen aufweisen.

14. Verbindung nach einem der vorhergehenden Ansprüche, dadurch gekennzeichnet, daß das freie Ende des Stützteiles (11, 12, 30, 116) als axiale Anlage für das benachbarte Stützpolster (13, 28, 121) nach radial innen bis an das Innenschutzrohr (7, 8, 25, 114) abgebogen ist.

15. Verbindung nach einem der vorhergehenden Ansprüche, dadurch gekennzeichnet, daß das freie Ende des Innenschutzrohres (53, 156) als axiale Anlage für das benachbarte Stützpolster (55, 160) nach radial außen bis an das Stützteil (59, 157) abgebogen ist.

16. Verbindung nach Anspruch 6, dadurch gekennzeichnet, daß das Stützpolster (160) einen U-förmigen Radialquerschnitt mit zur Leitungsachse parallelen Schenkeln aufweist und daß der radial außen liegende Schenkel des Stützpolsters an dem anderen Rohrteil (158) abgewandten Ende des Stützteiles (157) und der radial innen liegende Schenkel auf der Außenseite des freien Endes des Innenschutzrohres (156) gehalten ist.

17. Verbindung nach Anspruch 16, dadurch gekennzeichnet, daß die freien Schenkelenden durch mit dem Stützteil (157) und dem Innenschutzrohr (156) verbundene Laschen (163) gefaßt sind.

18. Verbindung nach Anspruch 17, dadurch gekennzeichnet, daß mehrere Laschen (163) sich je über einen Umfangsabschnitt erstrecken und sich mit entsprechenden Ausnehmungen der Schenkelenden in formschlüssigem Eingriff befinden.

19. Verbindung nach Anspruch 17 oder 18, dadurch gekennzeichnet, daß die Laschen Bestandteil eines in das Stützteil eingesetzten bzw. auf das Innenschutzrohr aufgesetzten Ringes bzw. einer entsprechenden Hülse sind.

20. Verbindung nach einem der Ansprüche 16 bis 19, dadurch gekennzeichnet, daß ein weiteres Stützpolster (160) mit U-förmigem Radialquerschnitt mit dem die Schenkel verbindenden Steg (162) gegen den Steg des ersten Stützpolsters gesetzt zwischen Stützteil (157) und Innenschutzrohr (156) mit seinen Schenkeln festgelegt ist.

21. Verbindung nach einem der vorhergehenden Ansprüche, dadurch gekennzeichnet, daß innerhalb des Innenschutzrohres (25, 53, 104, 114) koaxial ein einseitig am dortigen Rohrteil (101, 113) bzw. Anschlußstück (22, 49) festgelegtes, sich im wesentlichen über die Länge des Leitungselementes bzw. des Innenschutzrohres erstreckendes Wärmeschutzrohr (33, 61, 112, 124) angeordnet ist.

22. Verbindung nach einem der vorhergehenden Ansprüche, dadurch gekennzeichnet, daß das Stützpolster auf der radial innen liegenden Seite einen Einsatz oder eine Schicht aus Keramikmaterial od. dgl. aufweist.

23. Verbindung nach einem der Ansprüche 1 bis 15, dadurch gekennzeichnet, daß die in Axialrichtung weisenden Flächen des Stützpolsters und die mit diesen in Berührung befindlichen Flächen des Innenschutzrohres und/oder des Stützteiles in Radialrichtung kreisbogenförmig verlaufen.

24. Verbindung nach einem der Ansprüche 1 bis 15, dadurch gekennzeichnet, daß der Axialquerschnitt der Stützpolster über den Umfang sich ändernd ausgebildet ist, derart, daß durch die Stützpolster in einer Richtung eine Sperrung der Gelenkverbindung bezüglich Schwenkbewegung gegeben ist, während in der dazu senkrechten Richtung durch die Stützpolster ein Freiraum für Schwenkbewegungen belassen ist.

25. Verbindung nach einem der vorhergehenden Ansprüche, dadurch gekennzeichnet, daß das Stützpolster aus temperatur- und korrosionsbeständigem Keramik- oder Metallmaterial in Form eines Faser- oder Drahtvlieses, -geflechtes, -gewebes, -gestrickes od. dgl. gepreßt ist.

26. Verbindung nach Anspruch 25, dadurch gekennzeichnet, daß das Stützpolster wenigstens teilweise aus einem Material mit Gleitlagereigenschaften besteht oder mit diesem beschichtet ist.

27. Verbindung nach Anspruch 25 oder 26, dadurch gekennzeichnet, daß das Stützpolster mit einem zugesetzten Gleitmittel verpreßt ist.

28. Verbindung nach einem der Ansprüche 25 bis 27, dadurch gekennzeichnet, daß das Stützpolster wenigstens einen Stützkörper mit gegenüber dem Polstermaterial größerer Härte bzw. Festigkeit eingepreßt enthält.

**Claims**

1. Articulated connection of pipe parts consisting of at least one flexible conduit element (3, 24, 51, 103, 117, 147, 159) in the form of a corrugated tube, metal bellows or metal hose, tightly connecting the pipe parts with one another, and at least one support part (11, 12; 30; 59; 105; 116; 145, 146, 157) connecting the pipe parts at least indirectly in mutually supporting manner through interposed, axially fixed support cushions (13, 14; 27, 28; 54, 55; 109, 121, 143, 144, 160) and issuing from a first one of the pipe parts (102, 115, 139, 140, 158) or an attachment piece (2, 23, 50) there, while the flow path for the medium is formed by an inner protective pipe (7, 8; 25, 53, 104, 114, 141, 142; 156) arranged within the conduit element, which pipe is secured with one end to the second pipe part (101, 113, 137, 138, 155) or an attachment piece (4, 22, 49) there, characterised in that the other end of the inner protective pipe (7, 8; 25, 53, 104, 114, 141, 142, 156) is in connection on its outside with at least one annularly surrounding support cushion (13, 14; 27, 28; 54, 55; 109, 121, 143, 144, 160), in that the support cushion is externally held by the support part (11, 12, 30; 59; 105, 116, 145, 146, 157) at least indirectly secured on the first pipe part (102, 115, 139, 140, 158) or an attachment piece (2, 23, 50) there, or formed by this, and in that the axial fixing of the support cushion takes place on both sides against the inner protective pipe and/or the support part.

2. Connection according to Claim 1, characterised in that the support part (11, 12; 30; 59), in common with the conduit element (3, 24, 51) is arranged, starting from the other pipe part (9, 10, 60) or an attachment piece (23, 50) there, within the conduit element.

3. Connection according to one of the preceding Claims, characterised in that in the case of multi-flow conduits having common attachment pieces (1, 2; 22, 23; 49, 50), for these a common conduit element (3, 24, 51) embracing the flow paths (5, 6, 26, 52) which lie side by side is connected with the attachment pieces.

4. Connection according to Claim 3, characterised in that the conduit element (3) corresponds substantially in cross-section to the looping contour of the flow paths (5, 6) lying side by side, including the parts forming them.

5. Connection according to Claim 4, characterised in that in the case of two-flow conduits the cross-section of the conduit element (3) corresponds to an oval.

6. Connection according to Claim 1, characterised in that the conduit element (103, 147, 159) is connected with the end of the support part (105, 116, 145, 146, 157) facing away from the first pipe part (102, 115, 126, 139, 140, 158) and in that the inner protective pipe (104, 114, 141, 142, 156), with its length exceeding that of the conduit element, protrudes with its free end into the support part, for the formation of the movably guided connection.

7. Connection according to Claim 6, characterised in that in the case of multi-flow conduits these comprise a common conduit element (147) embracing the adjacent flow paths and connected with the pipe parts (137, 138, 139, 140), in that the conduit element is connected on both sides with one attachment plate (148, 153) in each case having openings (149, 150) for the flow paths and in that the one attachment plate (148) is made fast with its openings, possibly with interposition of the ends of the inner protective pipes (141, 142), on the ends of the associated pipe parts (137, 138) and the other attachment plate (153) is made fast on the free ends of the associated support parts (145, 146).

8. Connection according to Claim 7, characterised in that the support parts (145, 146) are united into one component embracing the mutually adjacent flow paths.

9. Connection according to one of Claims 1 to 7, characterised in that the support part (11, 12; 30, 59, 105, 116, 157) is formed essentially as a pipe piece coaxial with the inner protective pipe (7, 8; 25; 53, 104, 114, 156).

10. Connection according to one of the preceding Claims, characterised in that the inner protective pipe (114, 156) and/or the support part (116, 157) are connected in one piece with the pipe parts (113, 115, 155, 158).

11. Connection according to one of the preceding Claims, characterised in that at least two support cushions (27, 28; 54, 55; 109, 121, 143, 144) are arranged side by side and held with mutual axial spacing by a shaft (29, 58, 110, 120) of the inner protective pipe (25, 104, 114, 141, 142) or of the support part (59), which shaft extends radially between them.

12. Connection according to Claim 11, characterised in that adjacent support cushions (13) are connected in one piece with one another, bridging over the shaft (15).

13. Connection according to one of Claims 11 or 12, characterised in that the support cushions have different dimensions in the axial direction.

14. Connection according to one of the preceding Claims, characterised in that the free end of the support part (11, 12, 30, 116) is bent over radially inwards as far as the inner protective pipe (7, 8, 25, 114), as axial abutment for the adjacent support cushion (13, 28, 121).

15. Connection according to one of the preceding Claims, characterised in that the free end of the inner protective pipe (53, 156) is bent over radially outwards as far as the support part (59, 157) as axial abutment for the adjacent support cushion (55, 160).

16. Connection according to Claim 6, characterised in that the support cushion (160) comprises a U-shaped radial cross-section with legs parallel to the conduit axis and in that the radially outwardly lying leg of the support cushion is held on the end of the support part (157) remote from the other pipe part (158) and the radially inwardly lying leg is held on the outside of the free end of the inner protective pipe (156).

17. Connection according to Claim 16, characterised in that the free leg ends are bound by plates (163) connected with the support part (157) and the inner protective pipe (156).

18. Connection according to Claim 17, characterised in that several plates (163) extend each over a circumferential section and are in shape-locking engagement with corresponding recesses of the leg ends.

19. Connection according to Claim 17 or 18, characterised in that the plates are a component of a ring inserted into the support part or set upon the inner protective pipe or of a corresponding sleeve.

20. Connection according to one of Claims 16 to 19, characterised in that a further support cushion (160) with U-shaped radial cross-section is set with the cross-piece (162) connecting the legs against the cross-piece of the first support cushion and made fast with its legs between support part (157) and inner protective pipe (156).

21. Connection according to one of the preceding Claims, characterised in that within the inner protective pipe (25, 53, 104, 114) a thermally protective pipe (33, 61, 112, 124) made fast on one side on the pipe part (101, 113) or attachment piece (22, 49), as the case may be, there and extending substantially over the length of the conduit element or of the inner protective pipe, is coaxially arranged.

22. Connection according to one of the preceding Claims, characterised in that the support cushion comprises an insert or a layer of ceramic material or the like, on the radially inwardly lying side.

23. Connection according to one of Claims 1 to 15, characterised in that the faces of the support cushion facing in the axial direction and the faces of the inner protective pipe and/or of the support part, situated in contact with these, have an arcuate course in the radial direction.

24. Connection according to one of Claims 1 to 15, characterised in that the axial cross-section of the support cushions is formed, varying over the circumference, in such a way that due to the support cushions there is a blocking of the articulated connection in regard to pivoting movement in one direction, while in the direction perpendicular thereto a free space is left for pivoting movements due to the support cushions.

25. Connection according to one of the preceding Claims, characterised in that the support cushion is pressed from temperature-resistant and corrosion-resistant ceramic or metal material in the form of a fibre or wire fleece, braiding, woven fabric, knitted fabric or the like.

26. Connection according to Claim 25, characterised in that the support cushion consists at least partly of, or is coated with, a material with plain bearing properties.

27. Connection according to Claim 25 or 26, characterised in that the support cushion is pressed with an added lubricant.

28. Connection according to one of Claims 25 to 27, characterised in that the support cushion contains at least one support body pressed in, having greater hardness or strength compared with the cushion material.

## Revendications

1. Raccord articulé entre longueurs de tubes, composé d'au moins un élément de conduite flexible (3, 24, 51, 103, 117, 147, 159), qui raccorde les longueurs de tubes entre elles à joint étanche, et qui est constitué par un tube ondulé, un soufflet métallique ou un tuyau métallique et par au moins un élément d'appui (11, 12; 30; 59; 105; 116; 145, 146, 147) qui assemble les longueurs de tubes l'une à l'autre au moins indirectement en les faisant supporter l'une par l'autre, par l'intermédiaire de garnitures d'appui interposées (13, 14; 27, 28; 54, 55; 109, 121, 143, 144, 160), bloquées dans la direction axiale, cet élément d'appui partant d'une première des longueurs de tubes ou d'une pièce de montage (2, 23, 50) prévue sur cette longueur de tube, le coduit d'écoulement étant formé par un tube protecteur intérieur (7, 8; 25, 53, 104, 114, 141, 142, 156) agencé à l'intérieur de l'élément de conduite et fixé par l'une de ses extrémités à la deuxième longueur de tube (101, 113, 137, 138, 155) ou à une pièce de montage (4, 22, 45) prévue sur cette longueur de tube, caractérisé en ce que l'autre extrémité du tube protecteur intérieur (7, 8; 25, 53, 104, 114, 141, 142, 156) est reliée sur son côté extérieur à au moins une garniture d'appui (13, 14; 27, 28; 54, 55; 109, 121, 143, 144, 160) qui l'entoure en anneau, que la garniture d'appui est tenue extérieurement par l'élément d'appui (11, 12; 30; 59; 105, 116, 145, 146, 157) fixé au moins indirectement à la première longueur de tube (102, 115, 139, 140, 158) ou à une pièce de montage prévue sur cette longueur, ou encore formé par cette longueur de tube ou cette pièce de montage et en ce que le blocage axial de la garniture d'appui s'effectue des deux côtés contre le tube protecteur intérieur et/ou l'élément d'appui.

2. Raccord selon la revendication 1, caractérisé en ce qu'il est prévu que l'élément d'appui (11, 12; 30; 59), avec l'élément de conduite (3, 24, 51), est disposé en partant de l'autre longueur de tube ou de la pièce de montage fixée à cette longueur, à l'intérieur de l'élément de conduite.

3. Raccord selon une quelconque des revendications précédentes, caractérisé en ce que dans le cas de conduites à plusieurs flux, qui présentent des pièces de montage communes (1, 2; 22, 23; 49, 50), un élément de conduite commun (3, 24, 51) qui renferme les conduits juxtaposés (5, 6, 26, 52), est assemblé au pièces de montages.

4. Raccord selon la revendication 3, caractérisé en ce qu'un élément de conduite (3) correspond en section transversale sensiblement au contour d'enveloppement des conduits (5, 6) justaposés, y compris les éléments qui forment ces conduits.

5. Raccord selon la revendication 4, caractérisé en ce que, dans le cas de conduites à deux flux, la section de l'élément de conduite (3) correspond à un ovale.

6. Raccord selon la revendication 1, caractérisé en ce que l'élément de conduite (103, 141, 159) est assemblé à l'extrémité de l'élément d'appui (105, 116, 145, 146, 157) qui est à l'opposé de la première longueur de tube (102, 115, 126, 139, 140, 153) et en ce que le tube protecteur intérieur (104, 114, 141, 142, 150), qui dépasse en longueur celle de l'élément de conduite, déborde par son extrémité libre dans l'élément d'appui, pour former la liaison guidée imobile.

7. Raccord selon la revendication 6, caractérisé en ce que dans le cas de conduites à plusieurs flux, ces dernières présentent un élément de conduite commun, qui englobe les conduits juxtaposés, et qui est relié aux longueurs de tubes (137, 138, 139, 140), que l'élément de conduite est relié à chacun de ses deux côtés à une plaque de montage (149, 150) présentant des ouvertures pour les conduits et que l'une (148) des plaques de montage est fixée, par ses ouvertures, éventuellement avec interpositions des extrémités des tubes portecteurs intérieurs (141, 142), sur les extrémités des longueurs de tubes correspondant (137, 138) tandis que l'autre plaque de montage (153) est fixée aux extrémités libres des éléments d'appui correspondants (145, 146).

8. Raccord selon la revendication 7, caractérisé en ce que les éléments d'appui (145, 146) sont réunis en un composant qui entoure les conduits juxtaposés.

9. Raccord selon une quelconque des revendications 1 à 7, caractérisé en ce que l'élément d'appui (11, 12; 30, 59, 105, 116, 157) est essentiellement constitué par une longueur de tube coaxiale au tube protecteur intérieur (7, 8; 25; 53, 104, 114, 156).

10. Raccord selon une quelconque des revendications précédentes, caractérisé en ce que le tube protecteur intérieur (114, 156) et/ou l'élément d'appui (116, 157) sont reliés aux longueurs de tubes (113, 115, 155, 158) en une seule pièce avec celles-ci.

11. Raccord selon une quelconque des revendications précédentes, caractérisé en ce qu'au moins deux garnitures d'appui (27, 28; 54, 55; 109, 121, 143, 144) sont disposées l'une à côté de l'autre et maintenues à un certain écartement axial mutuel par une onde (29, 58, 110, 120) du tube protecteur intérieur (25, 104, 114, 141, 142) ou de l'élément d'appui (59) qui fait saillie radialement entre ces deux garnitures.

12. Raccord selon la revendication 11, caractérisé en ce que les garnitures d'appui adjacentes (13) sont réunies l'une à l'autre en une seule pièce, et encadrent l'onde (15).

13. Raccord selon une quelconque des revendications 11 et 12, caractérisé en ce que les garnitures d'appui présentent des dimensions différentes dans la direction axiale.

14. Raccordement selon une quelconque des revendications précédentes, caractérisé en ce que l'extrémité libre de l'élément d'appui (11, 12, 30, 116) est repliée radialement vers l'intérieur, jusqu'au tube protecteur intérieur (7, 8, 25, 114) pour servir d'appui axial pour la garniture d'appui adjacente (13, 28, 121).

15. Raccord selon une quelconque des revendications précédentes, caractérisé en ce que l'extrémité libre du tube protecteur intérieur (53, 116) est repliée radialement vers l'extérieur, jusqu'à l'élément d'appui (59, 157) pour servir de portée axiale pour la garniture d'appui adjacente (50, 160).

16. Raccord selon la revendication 6, caractérisé en ce que la garniture d'appui (160) présente une section transversale radiale en forme de U, avec des branches parallèles à l'axe de la conduite, et en ce que la branche radialement extérieure de la garniture d'appui est tenue contre l'extrémité de l'élément d'appui (157) qui est la plus éloignée de l'autre longueur de tube (158) et que la branche radialement intérieure est maintenue contre la surface externe de l'extrémité libre du tube protecteur intérieur (156).

17. Raccord selon la revendication 16, caractérisé en ce que les extrémités libres des branches sont enserrées par des pattes (163) qui sont solidaires de l'élément d'appui (154) et du tube protecteur intérieur (156).

18. Raccord selon la revendication 17, caractérisé en ce que plusieurs pattes (163) s'étendent sur un segment de la circonférence et sont en prise par sûreté de forme avec des évidements correspondants des extrémités des branches.

19. Raccord selon la revendication 17 ou la revendication 18, caractérisé en ce que les pattes font partie d'une bague encastrée dans l'élément d'appui ou d'un manchon correspondant emmanché sur le tube protecteur intérieur.

20. Raccord selon une quelconque des revendications 16 à 19, caractérisé en ce qu'une garniture d'appui additionnelle (160) possédant une section transversale radiale en forme de U, est fixée par ses branches entre l'élément d'appui (157) et le tube protecteur intérieur (156), et en appui par son âme (162) qui relie les branches contre l'âme de la première garniture d'appui.

21. Raccord selon une quelconque des revendications précédentes, caractérisé en ce qu'à l'intérieur du tube protecteur intérieur (25, 53, 104, 114), est disposé coaxialement un tube de protection thermique (33, 61, 112, 124), qui est fixé d'un côté à la longueur de tube (101, 113) correspondante, ou à la pièce de montage (22, 49) correspondante, et qui s'étend sensiblement sur toute la longueur de l'élément de conduite ou du tube protecteur intérieur.

22. Raccord selon une quelconque des revendications précédentes, caractérisé en ce que la garniture d'appui présente une insertion ou une couche d'une matière céramique ou équivalent sur sa face radialement intérieure.

23. Raccord selon une quelconque des revendications 1 à 15, caractérisé en ce que les surfaces de la garniture d'appui qui regardent dans la direction axiale et les surfaces du tube protecteur intérieur et/ou de l'élément d'appui qui sont en contact avec les surfaces précitées de la garniture d'appui s'étendent avec un profil d'arc de cercle dans la direction radiale.

24. Raccord selon une quelconque des revendications 1 à 15, caractérisé en ce que la section axiale des garnitures d'appui est d'une configuration qui varie sur la circonférence de telle sorte que les garnitures d'appui assurent dans un sens un blocage du raccord articulé sous l'aspect du mouvement d'oscillation tandis que, dans la direction perpendiculaire à la première, les garnitures d'appui laissent subsister un espace libre pour les mouvements d'oscillation.

25. Raccord selon une quelconque des revendications précédentes, caractérisé en ce que la garniture d'appui est formée par moulage ou estampage, à partir d'une matière céramique ou métallique résistant à la température et à la corrosion, et présentée sous la forme d'une nappe, d'une tresse, d'un tissu, d'un tricot, ou équivalent, de fibres ou de fils.

26. Raccord selon la revendication 25, caractérisé en ce que la garniture d'appui est composée au moins partiellement d'une matière possédant des propriétés antifriction, ou est revêtue d'une telle matière.

27. Raccord selon la revendication 25 ou la revendication 26, caractérisé en ce que la garniture d'appui est comprimée avec addition d'un lubrifiant.

28. Raccord selon une quelconque des revendications 25 à 27, caractérisé en ce que la garniture d'appui comprend au moins un élément d'appui inséré, qui présente une dureté ou une résistance mécanique supérieure à celle de la matière de la garniture.

Fig. 1

Fig. 2

Fig. 3

Fig. 4

Fig. 5

EP 0 208 128 B1

Fig.6

Fig. 7

Fig. 8

Fig. 9

Fig. 10

Fig. 11

153

Fig. 12

145 , 146

Fig. 13

Fig. 14

Fig. 15

Fig. 16